# EUROPEAN PATENT SPECIFICATION

(11) **EP 2 187 658 B1**
(45) Date of publication and mention of the grant of the patent: **18.09.2013**
(21) Application number: 09165810.4
(22) Date of filing: 17.07.2009
(51) Int. Cl.: H04R 3/12, H04S 7/00

(54) **Positioning and reproducing screen sound source with high resolution**
Positionierung und Wiedergabe einer Bildschirmtonquelle mit hoher Auflösung
Positionnement et reproduction de la source sonore d'écran à haute résolution

(30) Priority: 11.11.2008 KR 20080111724
(43) Date of publication of application: 19.05.2010
(73) Proprietor: Samsung Electronics Co., Ltd., Suwon-si, Gyeonggi-do, 443-742 (KR)
(72) Inventor: Kim, Jung-ho, Gyeonggi-do (KR); Jeong, So-young, Seoul (KR); Kim, Jeong-su, Gyeonggi-do (KR)
(74) Representative: Hylarides, Paul Jacques

(56) References cited:
- EP-A2- 1 919 259
- JP-A- 2 224 495
- US-A1- 2007 104 341
- PULKII V: "VIRTUAL SOUND SOURCE POSITIONING USING VECTOR BASE AMPLITUDE PANNING", JOURNAL OF THE AUDIO ENGINEERING SOCIETY, AUDIO ENGINEERING SOCIETY, NEW YORK, NY, US, vol. 45, no. 6, 1 June 1996 (1996-06-01), pages 456-466, XP000695381, ISSN: 1549-4950

## Description

### CROSS REFERENCE TO RELATED APPLICATION(S)

This application claims the benefit under 35 U.S.C. § 119(a) of a Korean Patent Application No. 10-2008-111724, filed on November 11, 2008.

### BACKGROUND

### 1. Field

The following description relates to an apparatus for positioning a screen sound source with high resolution and a method of reproducing the screen sound source.

### 2. Description of Related Art

With the wide-spread use of large-screen displays, demand for enhancing the user listening experience by spatially matching an image with a sound source has been increasing, and this has prompted a considerable amount of research into such spatial matching.

In order to spatially match an image with a sound source on a screen, a plurality of loudspeakers are two-dimensionally disposed on or behind the screen of a display, and a sound source is reproduced through a loudspeaker corresponding to a specific screen position.

This method can generate a sound source at an accurate position of a visual object displayed on the screen of the display, and it requires several loudspeakers to generate a sound source at a position on the screen of the display with high resolution.

In addition, the method should separately drive a large number of loudspeakers that are two-dimensionally disposed on or behind the screen of the display. Thus, an amplifier and controller are included for separately controlling the large number of loudspeakers.

For these reasons, the method can be employed in an application field such as theaters in which a large enough space is provided behind the screen. The method can be difficult to use in small-scale displays such as household flat panel televisions (TVs) whose front is made of glass.

EP 1 919 259 A2 discloses an output control system for a multi-display apparatus. A plurality of television displays are arranged one above another or side by side and looking in the same direction. An image may be displayed in enlargement on the plurality of television displays. Loudspeakers are arranged in the sides of the multi-display apparatus. The individual displays are controlled by the output control system and audio-sounds may be output from a plurality of the loud speakers.

It is an object of the present invention to provide an apparatus for positioning a screen sound source and a method of reproducing a screen sound source to having an improved spatial resolving power.

### SUMMARY

In one general aspect, an apparatus includes a controller and a multi-sound source processor coupled to the controller. The controller is configured to select a plurality of loudspeaker sets, with each set including at least three of a plurality of loudspeakers installed at the periphery of a display, in order to position a virtual screen sound source in synchronization with a visual object displayed at a specific position on a screen of the display. The multi-sound source processor is configured to generate individual sound sources corresponding to the respective loudspeaker sets selected by the controller, generate a multi-sound source by overlapping the generated individual sound sources, and output the multi-sound source through loudspeakers included in the loudspeaker sets.

Implementations may include one or more of the following features. For example, the multi-sound source processor may include a plurality of sound source generators configured to generate the individual sound sources for the respective loudspeaker sets selected by the controller from a sound source signal; a sound source synthesizer configured to generate the multi-sound source by synthesizing the individual sound sources generated by the respective sound source generators; a sound source amplifier-configured to amplify the multi-sound source generated by the sound source synthesizer; and a loudspeaker output unit configured to select an output path to output the multi-sound source amplified by the sound source amplifier through the loudspeakers included in the loudspeaker sets selected by the controller. The multi-sound source processor may also include a band-pass filter configured to divide the sound source signal according to frequency band and output the divided sound source signals to the respective sound source generators.

The apparatus may include a digital-to-analog (DA) converter configured to convert digital sound source data into an analog sound source signal.

The controller may select at least two of the loudspeaker sets, with each set including loudspeakers disposed at vertices of virtual polygons, including a visual object position therein. The controller may select the loudspeaker sets that each includes at least three loudspeakers with reference to loudspeaker set information configured according to position on the screen of the display. The controller may select the loudspeaker sets in order of small to large maximum angles between a virtual screen sound source reference vector from a viewer to the visual object and virtual loudspeaker vectors from the viewer to respective loudspeakers. The controller may select the loudspeaker sets in order of small to large sums of angles between a virtual screen sound source reference vector from a viewer to the visual object and virtual loudspeaker vectors from the viewer to respective loudspeakers. The controller may select the loudspeaker sets in order of small to large averages of angles between a virtual screen sound source reference vector from a viewer to the visual object and virtual loudspeaker vectors from the viewer to respective loudspeakers. The controller may select the loudspeaker sets in order of small to large areas of the virtual polygons.

In another general aspect, a screen sound source with high resolution is reproduced by determining a position of a virtual screen sound source to be reproduced on the screen of a display in response to a sound source being input; selecting a plurality of loudspeaker sets corresponding to the determined virtual screen sound source position with reference to loudspeaker set information in response to the virtual screen sound source position being determined; generating individual sound sources corresponding to the respective selected loudspeaker sets; generating a multi-sound source by overlapping the generated individual sound sources; and outputting the generated multi-sound source through loudspeakers included in the selected loudspeaker sets.

Implementations may include one or more of the following features. For example, the generated multi-sound source may be outputted through loudspeakers included in the selected loudspeaker sets by amplifying and outputting the multi-sound source.

The individual sound sources corresponding to the respective selected loudspeaker sets may be generated by generating the individual sound sources by dividing a sound source signal according to frequency band.

In another general aspect, a screen sound source is reproduced with high resolution by determining a position of a virtual screen sound source to be reproduced on the screen of a display in response to a sound source being input; selecting at least two of loudspeaker sets, with each set including loudspeakers disposed at vertices of virtual polygons, including the determined virtual screen sound source position in response to the virtual screen sound source position being determined; generating individual sound sources corresponding to the respective selected loudspeaker sets; generating a multi-sound source by overlapping the generated individual sound sources; and outputting the generated multi-sound source through loudspeakers included in the selected loudspeaker sets.

Implementations may include one or more of the following features. For example, the generated multi-sound source may be outputted through loudspeakers included in the selected loudspeaker sets by amplifying and outputting the multi-sound source.

The individual sound sources corresponding to the respective selected loudspeaker sets may be generated by generating the individual sound sources by dividing a sound source signal according to frequency band.

The at least two of loudspeaker sets, with each including loudspeakers disposed at vertices of virtual polygons including the virtual screen sound source position, may be selected by selecting the loudspeaker sets in order of small to large maximum angles between a virtual screen sound source reference vector from a viewer to a visual object and virtual loudspeaker vectors from the viewer to respective loudspeakers.

The at least two of loudspeaker sets, with each including loudspeakers disposed at vertices of virtual polygons including the virtual screen sound source position, may be selected by selecting the loudspeaker sets in order of small to large sums of angles between a virtual screen sound source reference vector from a viewer to a visual object and virtual loudspeaker vectors from the viewer to respective loudspeakers.

The at least two of loudspeaker sets, with each set including loudspeakers disposed at vertices of virtual polygons including the virtual screen sound source position, may be selected by selecting the loudspeaker sets in order of small to large averages of angles between a virtual screen sound source reference vector from a viewer to a visual object and virtual loudspeaker vectors from the viewer to respective loudspeakers.

The at least two of loudspeaker sets, with each set including loudspeakers disposed at vertices of virtual polygons including the virtual screen sound source position, may be selected by selecting the loudspeaker sets in order of small to large areas of the virtual polygons.

In another general aspect, a plurality of loudspeaker sets, with each set including at least three of a plurality of loudspeakers installed at the periphery of a display, are selected, individual sound sources corresponding to the respective selected loudspeaker sets are generated, and a multi-sound source is generated by overlapping the generated individual sound sources and output through loudspeakers included in the loudspeaker sets.

In another additional aspect, the individual sound sources may be generated by dividing a sound source signal according to frequency band, and the multi-sound source may be generated by overlapping the generated individual sound sources.

Since a plurality of loudspeaker sets, with each set including at least three of a plurality of loudspeakers installed at the periphery of the display, are selected and a multi-sound source obtained by overlapping individual sound sources corresponding to the respective selected loudspeaker sets are output through loudspeakers included in the selected loudspeaker sets, the spatial resolving power of a virtual screen sound source spatially synchronized with a visual object displayed at a specific position on the screen of the display can be improved.

In addition, since a multi-sound source obtained by overlapping individual sound sources is output through a plurality of loudspeakers included in a plurality of selected loudspeaker sets, the sound pressure of a virtual screen sound source spatially synchronized with a visual object displayed at a specific position on the screen of the display can be improved.

Furthermore, individual sound sources are generated by dividing a sound source signal according to frequency band, a multi-sound source is generated by overlapping the generated individual sound sources, and thus a screen sound source can be reproduced in a wide frequency band.

The spatial resolving power of a virtual screen sound source spatially synchronized with a visual object displayed at a specific position on the screen of a display is improved. The sound pressure of a virtual screen sound source spatially synchronized with a visual object displayed at a specific position on the screen of a display is also improved. A screen sound source can be reproduced in a wide frequency band. A virtual screen sound source having improved spatial resolving power can be positioned in spatial synchronization with a visual object displayed at a specific position on the screen of a small-scale display, such as a household flat panel TV. Other features and aspects will be apparent from the following detailed description, the drawings, and the claims.

### BRIEF DESCRIPTION OF THE DRAWINGS

FIG. 1 is a block diagram of an exemplary apparatus for positioning a screen sound source with high resolution.
FIG. 2 is an illustration of an example of loudspeaker selection for screen sound source positioning.
FIG. 3 is a chart of an exemplary loudspeaker set information.
FIG. 4 is a diagram of exemplary virtual vectors for loudspeaker set selection.
FIG. 5 is a flowchart of an exemplary procedure for positioning a screen sound source with high resolution according.
FIG. 6 is a flowchart of an exemplary procedure for positioning a screen sound source with high resolution.

Throughout the drawings and the detailed description, unless otherwise described, the same drawing reference numerals will be understood to refer to the same elements, features, and structures. The relative size and depiction of these elements may be exaggerated for clarity, illustration, and convenience.

### DETAILED DESCRIPTION

The following detailed description is provided to assist the reader in gaining a comprehensive understanding of the media, methods, apparatuses, and systems described herein. Accordingly, various changes, modifications, and equivalents of the media, methods, apparatuses, and systems described herein will be suggested to those of ordinary skill in the art. Also, descriptions of well-known functions and structures may be omitted for increased clarity and conciseness.

In a small-scale display such as a household flat panel television (TV) whose front is made of glass, due to spatial limitations, it is impractical to two-dimensionally dispose a plurality of loudspeakers on or behind the screen of the display and spatially match an image with a sound source by reproducing the sound source through a loudspeaker corresponding to a specific position on the screen.

To reduce or minimize spatial limitations, a plurality of loudspeakers may be disposed outside the screen of the display, and some of the loudspeakers may be appropriately selected to reproduce a sound source that spatially matches the location of an image.

In a geometric structure in which a plurality of loudspeakers are disposed outside the screen of the display, it is difficult to uniformly divide the entire screen. Thus, the spatial resolving power for sound source positioning is limited to part of the screen.

In addition, small loudspeakers are used due to limited space outside the screen of the display. Thus, the small loudspeaker diameter of the small loudspeakers limits the range of output frequency and makes it difficult to output low-frequency components, and the small loudspeaker thickness limits installation of a permanent magnet and voice coil and makes it difficult to generate sufficient sound pressure.

Accordingly, exemplary embodiments that select a plurality of loudspeaker sets that each include at least three of a plurality of loudspeakers installed at the periphery of the display and thus can improve the spatial resolving power and sound pressure of a virtual screen sound source spatially synchronized with a visual object displayed at a specific position on the screen of the display and reproduce the screen sound source in a wide frequency band, will be described.

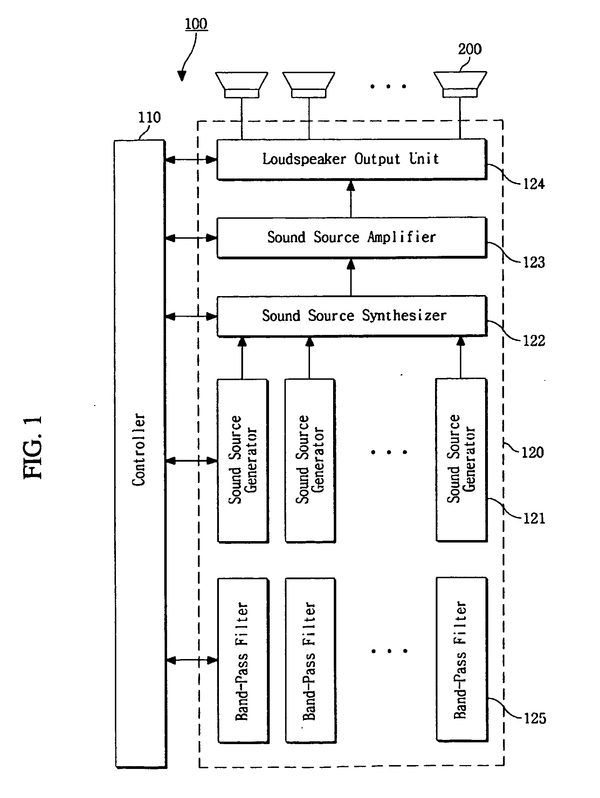

Referring to FIG. 1, an apparatus 100 for positioning a screen sound source with high resolution includes a controller 110 and a multi-sound source processor 120. The above mentioned 'high resolution' is a meaning of 'improved spatial resolution power of sound'.

In order to generate a virtual screen sound source in synchronization with a visual object displayed at a specific position on the screen of a display, the controller 110 selects a plurality of loudspeaker sets that each include at least three of a plurality of loudspeakers 200 installed at the periphery of the display.

The controller 110 may be implemented to select the loudspeaker sets using one or two methods. The first method is a lookup table-based loudspeaker set selection method that includes storing, in advance, information on loudspeaker sets configured according to position on the screen of the display and selecting a plurality of loudspeaker sets with reference to the loudspeaker set information.

The second method is a real-time computation-based loudspeaker set selection method that includes finding out, in real time, an optimum loudspeaker that can position a virtual screen sound source at the position of a visual object displayed on the screen of the display and selecting a plurality of loudspeaker sets. These methods will be described in detail below.

The multi-sound source processor 120 generates individual sound sources corresponding to the respective loudspeaker sets selected by the controller 110, generates a multi-sound source by overlapping the generated individual sound sources, and outputs the multi-sound source through the loudspeakers 200 included in the loudspeaker sets.

The multi-sound source processor 120 may include a plurality of sound source generators 121, a sound source synthesizer 122, a sound source amplifier 123, and a loudspeaker output unit 124.

The sound source generators 121 generate individual sound sources for the respective loudspeaker sets selected by the controller 110 from a sound source signal. Each of the individual sound sources may be a sound source signal converted from the original sound signal according to the characteristics of the loudspeakers 200 included in each of the selected loudspeaker sets.

To correct distortion of a sound source caused by difference in distance and angle between respective loudspeakers included in a loudspeaker set and a viewer, difference in human recognition of upper and lower-space resolving powers of a plane sound source, and difference in directivity of a sound source according to frequency, the sound source is positioned on the screen using a vector-based amplitude panning (VBAP) method, etc.

The VBAP method provides sound source vector components of three loudspeakers in space and positions a sound source in a virtual triangle having the three loudspeakers at its vertices using the vectors.

When a plurality of loudspeaker sets are selected by the controller 110, the sound source generators 121 generate individual sound sources corresponding to the respective selected loudspeaker sets using a method of correcting an original sound source signal using, for example, the VBAP method, etc.

The sound source synthesizer 122 generates a multi-sound source by synthesizing the individual sound sources generated by the sound source generators 121. For example, a mixer is used as the sound source synthesizer 122 to synthesize the individual sound sources generated by the sound source generators 121 and generate an overlapped multi-sound source.

The sound source amplifier 123 amplifies the multi-sound source generated by the sound source synthesizer 122. For example, a plurality of amplifiers are used as the sound source amplifier 123 to adjust the gains of the loudspeakers 200 included in each loudspeaker set and separately amplify the multi-sound source according to the characteristics of the loudspeakers 200.

The loudspeaker output unit 124 selects an output path to output the multi-sound source amplified by the sound source amplifier 123 through the loudspeakers 200 included in the loudspeaker sets selected by the controller 110. For example, a matrix switch, which selects n outputs from m inputs, is used as the loudspeaker output unit 124 to output the amplified multi-sound source through the loudspeakers 200 included in the loudspeaker sets selected by the controller 110.

In this way, a plurality of loudspeaker sets, which each include at least three of a plurality of loudspeakers installed at the periphery of a display, are selected, a multi-sound source obtained by overlapping individual sound sources corresponding to the respective selected loudspeaker sets is output through loudspeakers included in the selected loudspeaker sets, and thus a viewer can hear the multi-sound source as one sound source. Consequently, the spatial resolving power of a virtual screen sound source spatially synchronized with a visual object displayed at a specific position on the screen of the display is improved.

Moreover, since a multi-sound source obtained by overlapping individual sound sources is output through many loudspeakers included in a plurality of selected loudspeaker sets, the sound pressure of a virtual screen sound source spatially synchronized with a visual object displayed at a specific position on the screen of the display can be improved.

The multi-sound source processor 120 may additionally include one or more band-pass filters 125. The band-pass filter 125 divides the sound source signal according to frequency band and outputs the divided sound source signals to the respective sound source generators 121.

A sound source reproduced through a loudspeaker 200 has directivity varying according to frequency. More specifically, in the case of low frequency, sound pressure is emitted in all directions and has no directivity. In addition, the higher a frequency, the higher sound pressure emitted in the front direction, and the lower sound pressure emitted in the other directions.

In this example, the band-pass filter 125 divides the sound source signal according to frequency band, outputs the divided sound source signals to the respective sound source generators 121, and the sound source generators 121 generate individual signals according to frequency band, respectively.

The individual signals generated according to frequency band are synthesized by the sound source synthesizer 122, and a multi-sound source obtained by overlapping the individual signals is output through a plurality of loudspeakers included in respective selected loudspeaker sets. Thus, it is possible to reproduce a screen sound source in a wide frequency band.

Here, a narrow interval between loudspeakers is preferable for high frequency, and a wide interval between loudspeakers is preferable for low frequency. These characteristics may be reflected in the selection of loudspeaker sets.

In some implementations, the controller 110 may be implemented to select at least two of loudspeaker sets that each includes loudspeakers disposed at vertices of virtual polygons including the position of a visual object. This particular implementation employs the second method, that is, the real-time computation-based loudspeaker set selection method.

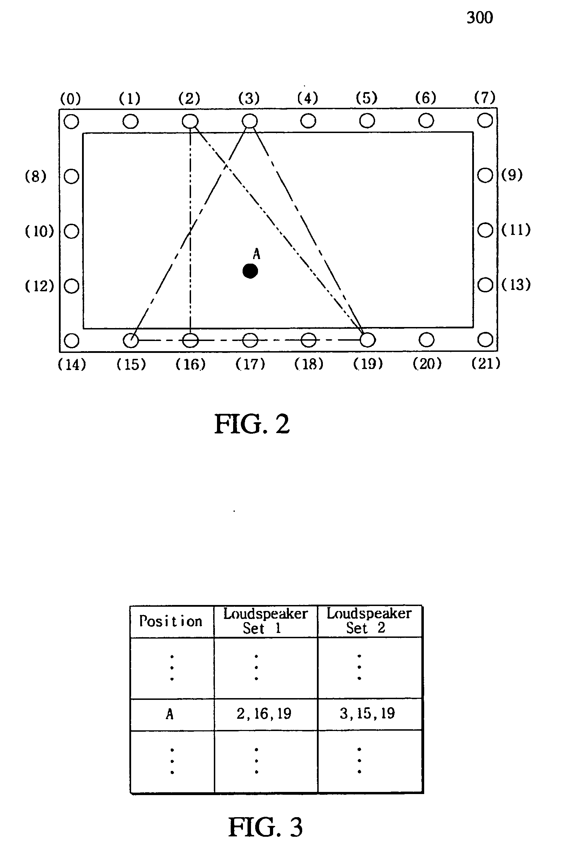

Referring to FIG. 2, a screen 300 is shown surrounded by loudspeakers 0-21. To position a screen sound source at visual object position A on the screen 300 of the display, a plurality of loudspeaker sets, that is, a loudspeaker set including loudspeaker 2, loudspeaker 16 and loudspeaker 19, and a loudspeaker set including loudspeaker 3, loudspeaker 15 and loudspeaker 19, for example, are selected.

The controller 110 may be implemented to select a plurality of loudspeaker sets, where each set includes at least three loudspeakers with reference to loudspeaker set information configured according to position on the screen 300 of the display. This particular implementation employs the first method, that is, the lookup table-based loudspeaker set selection method.

Referring to FIG. 3, to position a screen sound source at visual object position A on the screen 300 of the display, a plurality of loudspeaker sets, that is, loudspeaker set 1 including loudspeaker 2, loudspeaker 16 and loudspeaker 19, and loudspeaker set 2 including loudspeaker 3, loudspeaker 15 and loudspeaker 19, for example, are selected with reference to the loudspeaker set information shown in FIG. 3.

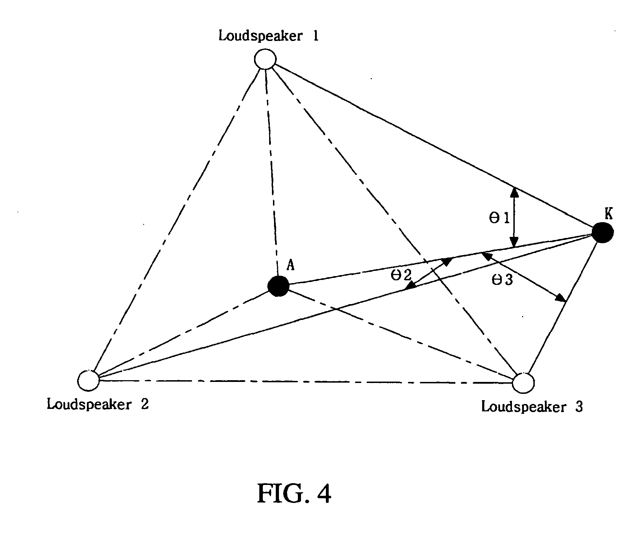

The controller 110 selects a plurality of loudspeaker sets, as described with reference to FIG. 4. A plurality of loudspeaker sets can be selected to generate loudspeaker set information; the method for doing so is the same as above, and a description thereof is omitted. Referring to FIG. 4, an example of virtual vectors for loudspeaker set selection is shown.

For example, it is assumed that angles between a virtual screen sound source reference vector from a viewer K to a visual object position A and virtual loudspeaker vectors from the viewer K to loudspeakers 1, 2 and 3, which are vertices of a virtual triangle including the visual object position A therein, are θ1, θ2 and θ3.

θ1, θ2 and θ3 may be calculated from respective loudspeakers included in each of a plurality of detected loudspeaker sets, and some of the detected loudspeaker sets may be selected using the calculated θ1, θ2 and θ3 of each loudspeaker set. In this way, one loudspeaker set can be selected from a plurality of detected loudspeaker sets. Meanwhile, the position of the viewer K may be determined by, for example, selecting a position in a direction perpendicular to the visual object position A.

In some implementations, the controller 110 may be implemented to select loudspeaker sets in order of small to large maximum angles between a virtual screen sound source reference vector from a viewer to a visual object and virtual loudspeaker vectors from the viewer to respective loudspeakers.

For example, in this case, the maximum of θ1, θ2 and θ3 calculated from each loudspeaker set is selected, the selected maximums are compared with each other, and loudspeaker sets are selected in order of small to large maximums. When two loudspeaker sets are selected, loudspeaker sets having the smallest maximum and the second smallest maximum are selected.

In some implementations, the controller 110 may be implemented to select loudspeaker sets in order of small to large sums of angles between a virtual screen sound source reference vector from a viewer to a visual object and virtual loudspeaker vectors from the viewer to respective loudspeakers.

For example, in this case, θ1, θ2 and θ3 calculated from each loudspeaker set are summed up, and loudspeaker sets are selected in order of small to large sums. When two loudspeaker sets are selected, loudspeaker sets having the smallest sum and the second smallest sum are selected.

In some implementations, the controller 110 may be implemented to select loudspeaker sets in order of small to large averages of angles between a virtual screen sound source reference vector from a viewer to a visual object and virtual loudspeaker vectors from the viewer to respective loudspeakers.

For example, in this case, θ1, θ2 and θ3 calculated from each loudspeaker set are averaged, and loudspeaker sets are selected in order of small to large averages. When two loudspeaker sets are selected, loudspeaker sets having the smallest average and the second smallest average are selected

In some implementations, the controller 110 may be configured to calculate the area of a virtual polygon of each loudspeaker set including loudspeakers disposed at vertices of the virtual polygon including the position of a visual object therein, and select loudspeaker sets in order of small to large areas of the virtual polygons. Since the positions of the loudspeakers included in each loudspeaker set are determined in advance, the areas of the virtual polygons can be obtained by mathematical operations.

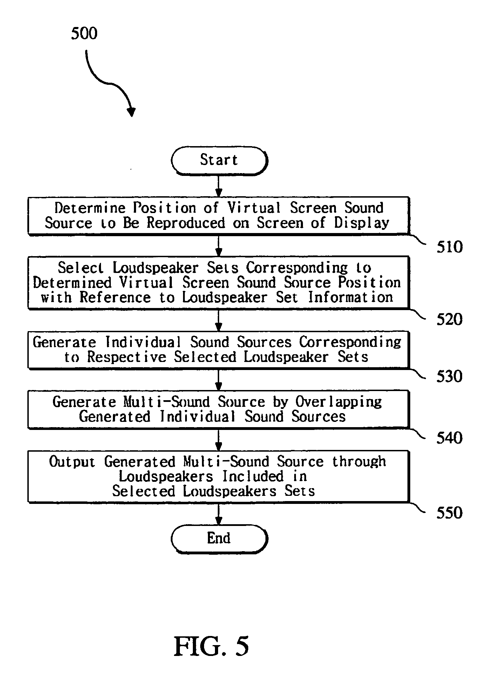

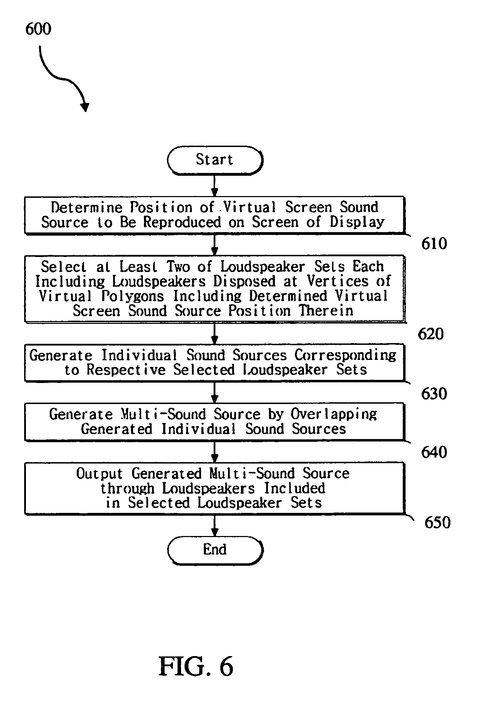

The screen sound source reproducing operation of the screen sound source positioning apparatus 100 having the above-described constitution will be described with reference to FIGS. 5 and 6. Referring to FIG. 5, an exemplary procedure 500 is performed for positioning a screen sound source with high resolution. Referring to FIG. 6, an exemplary procedure 600 is performed for positioning a screen sound source with high resolution.

In FIG. 5, a screen sound source is reproduced using the above-mentioned lookup table-based loudspeaker set selection method. When a sound source is input, the screen sound source positioning apparatus 100 determines the position of a virtual screen sound source to be reproduced on the screen of the display in operation 510.

For example, the screen sound source positioning apparatus 100 may analyze output visual information to extract a visual object that will be synchronized with the virtual screen sound source to be reproduced, calculate information on the position of the extracted visual object on the screen, and determine the position of the virtual screen sound source to be reproduced from the calculated position information.

When the position of the virtual screen sound source is determined in operation 510, the screen sound source positioning apparatus 100 selects a plurality of loudspeaker sets corresponding to the determined virtual screen sound source position with reference to loudspeaker set information in operation 520.

The method of selecting a plurality of loudspeaker sets to position a virtual screen sound source to be synchronized with a visual object with reference to loudspeaker set information has been described above and will not be repeated.

When a plurality of loudspeaker sets are selected in operation 520, the screen sound source positioning apparatus generates individual sound sources corresponding to the respective selected loudspeaker sets in operation 530. In operation 530, individual sound sources may be generated by dividing a sound source signal according to frequency band. The method of generating individual sound sources corresponding to respective selected loudspeakers sets has been described above and will not be repeated.

When individual sound sources corresponding to the respective loudspeaker sets are generated in operation 530, the screen sound source positioning apparatus generates a multi-sound source by overlapping the generated individual sound sources in operation 540. In operation 550, the screen sound source positioning apparatus outputs the multi-sound source generated in operation 540 through loudspeakers included in the selected loudspeaker sets. In operation 550, the multi-sound source may be amplified and output.

In this way, a plurality of loudspeaker sets, with each set including at least three of a plurality of loudspeakers installed at the periphery of the display, are selected, and a multi-sound source obtained by overlapping individual sound sources corresponding to the respective selective loudspeaker sets is output through loudspeakers included in the selected loudspeaker sets, such that the spatial resolving power of a virtual screen sound source spatially synchronized with a visual object displayed at a specific position on the screen of the display can be improved.

In addition, since a multi-sound source obtained by overlapping individual sound sources is output through a plurality of loudspeakers included in a plurality of selected loudspeaker sets, the sound pressure of a virtual screen sound source spatially synchronized with a visual object displayed at a specific position on the screen of the display can be improved.

Furthermore, individual sound sources are generated by dividing a sound source signal according to frequency band, a multi-sound source is generated by overlapping the generated individual sound sources, and thus a screen sound source can be reproduced in a wide frequency band.

As shown in FIG. 6, a screen sound source is reproduced using the above-mentioned real-time computation-based loudspeaker set selection method. Referring to FIG. 6, when a sound source is input, the screen sound source positioning apparatus determines the position of a virtual screen sound source to be reproduced on the screen of the display in operation 610.

For example, the screen sound source positioning apparatus 100 may analyze output visual information to extract a visual object that will be synchronized with the virtual screen sound source to be reproduced, calculate information on the position of the extracted visual object on the screen, and determine the position of the virtual screen sound source to be reproduced from the calculated position information.

After the position of the virtual screen sound source is determined in operation 610, the screen sound source positioning apparatus 100 selects at least two of loudspeaker sets, with each set including loudspeakers disposed at vertices of virtual polygons including the determined virtual screen sound source position therein in operation 620.

Here, loudspeaker sets may be selected in order of small to large maximum angles between a virtual screen sound source reference vector from a viewer to a visual object and virtual loudspeaker vectors from the viewer to respective loudspeakers.

Otherwise, loudspeaker sets may be selected in order of small to large sums of angles between a virtual screen sound source reference vector from a viewer to a visual object and virtual loudspeaker vectors from the viewer to respective loudspeakers.

Otherwise, loudspeaker sets may be selected in order of small to large averages of angles between a virtual screen sound source reference vector from a viewer to a visual object and virtual loudspeaker vectors from the viewer to respective loudspeakers.

Otherwise, loudspeaker sets may be selected from among loudspeaker sets that each includes loudspeakers disposed at vertices of virtual polygons including the position of a visual object therein in order of small to large areas of the virtual polygons.

After a plurality of loudspeaker sets are selected in operation 620, the screen sound source positioning apparatus 100 generates individual sound sources corresponding to the respective selected loudspeaker sets in operation 630. In operation 630, individual sound sources may be generated by dividing a sound source signal according to frequency band. The method of generating individual sound sources corresponding to respective selected loudspeakers sets has been described above and will not be repeated.

When individual sound sources corresponding to the respective loudspeaker sets are generated in operation 630, the screen sound source positioning apparatus 100 generates a multi-sound source by overlapping the generated individual sound sources in operation 640. In operation 650, the screen sound source positioning apparatus 100 outputs the multi-sound source generated in operation 640 through loudspeakers included in the selected loudspeaker sets. In operation 650, the multi-sound source may be amplified and output.

In this way, a plurality of loudspeaker sets, with each set including at least three of a plurality of loudspeakers installed at the periphery of a display, are selected, and a multi-sound source obtained by overlapping individual sound sources corresponding to the respective selective loudspeaker sets is output through loudspeakers included in the selected loudspeaker sets, such that the spatial resolving power of a virtual screen sound source spatially synchronized with a visual object displayed at a specific position on the screen of the display can be improved.

In addition, since a multi-sound source obtained by overlapping individual sound sources is output through a plurality of loudspeakers included in a plurality of selected loudspeaker sets, the sound pressure of a virtual screen sound source spatially synchronized with a visual object displayed at a specific position on the screen of the display can be improved.

Furthermore, individual sound sources are generated by dividing a sound source signal according to frequency band, a multi-sound source is generated by overlapping the generated individual sound sources, and thus a screen sound source can be reproduced in a wide frequency band.

As apparent from the above description, the exemplary embodiments can improve the spatial resolving power and sound pressure of a virtual screen sound source spatially synchronized with a visual object displayed at a specific position on the screen of a display, and can reproduce a screen sound source in a wide frequency band.

The methods described above may be recorded, stored, or fixed in one or more computer-readable media that includes program instructions to be implemented by a computer to cause a processor to execute or perform the program instructions. The media may also include, alone or in combination with the program instructions, data files, data structures, and the like. Examples of computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The described hardware devices may be configured to act as one or more software modules in order to perform the operations and methods described above, or vice versa.

A number of exemplary embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An apparatus (100) for positioning a screen sound source with high resolution, the apparatus comprising
a controller (110) configured, in order to position a virtual screen sound source in synchronization with a visual object displayed at a specific position on a screen of a display to select a plurality of loudspeaker sets, with each set including at least three of a plurality of loudspeakers (200) installed at the periphery of the display (300); **characterized by**
a multi-sound source processor (120) configured to generate individual sound sources object corresponding to the respective loudspeaker sets selected by the controller for the same visual object, generate a multi-sound source by overlapping the generated individual sound sources, and output the multi-sound source through loudspeakers included in the loudspeaker sets.

2. The apparatus of claim 1, wherein the multi-sound source processor includes:
a plurality of sound source generators (121) configured to generate the individual sound sources for the respective loudspeaker sets selected by the controller from a sound source signal;
a sound source synthesizer (122) configured to generate the multi-sound source by synthesizing the individual sound sources generated by the respective sound source generators;
a sound source amplifier (123) configured to amplify the multi-sound source generated by the sound source synthesizer; and
a loudspeaker output unit (124) configured to select an output path to output the multi-sound source amplified by the sound source amplifier through the loudspeakers included in the loudspeaker sets selected by the controller.

3. The apparatus of claim 2, wherein the multi-sound source processor further includes:
a band-pass filter (125) configured to divide the sound source signal according to frequency band and output the divided sound source signals to the respective sound source generators.

4. The apparatus of claim 1, further comprising:
a digital-to-analog (DA) converter configured to convert digital sound source data into an analog sound source signal.

5. The apparatus of claim 1, wherein the controller selects at least two of the loudspeaker sets, with each set including loudspeakers (200) disposed at vertices of virtual polygons, including a visual object position therein.

6. The apparatus of claim 5, wherein the controller selects the loudspeaker sets that each include at least three loudspeakers (200) with reference to loudspeaker set information configured according to position on the screen of the display.

7. The apparatus of claim 5, wherein the controller selects the loudspeaker sets in order of small to large maximum angles between a virtual screen sound source reference vector from a viewer to the visual object and virtual loudspeaker vectors from the viewer to respective loudspeakers.

8. The apparatus of claim 5, wherein the controller selects the loudspeaker sets in order of small to large sums of angles between a virtual screen sound source reference vector from a viewer to the visual object and virtual loudspeaker vectors from the viewer to respective loudspeakers.

9. The apparatus of claim 5, wherein the controller selects the loudspeaker sets in order of small to large averages of angles between a virtual screen sound source reference vector from a viewer to the visual object and virtual loudspeaker vectors from the viewer to respective loudspeakers.

10. The apparatus of claim 5, wherein the controller selects the loudspeaker sets in order of small to large areas of the virtual polygons.

11. A method of reproducing a screen sound source with high resolution, the method comprising:
in response to a sound source being input, determining (510, 610) a position of a virtual screen sound source to be reproduced in synchronization with a visual object displayed at a specific position on the screen of a display;
in response to the virtual screen sound source position being determined, selecting (520, 620) a plurality of loudspeaker sets, with each set including at least three of a plurality of loud speakers, corresponding to the determined virtual screen sound source position with reference to loudspeaker set information; **characterized in**
generating (530,630) individual sound sources corresponding to the respective selected loudspeaker sets for the visual object;
generating a multi-sound source by overlapping the generated individual sound sources; and
outputting the generated multi-sound source through loudspeakers included in the selected loudspeaker sets.

12. The method of claim 11, wherein outputting the generated multi-sound source through loudspeakers included in the selected loudspeaker sets comprises amplifying and outputting the multi-sound source.

13. The method of claim 11, wherein generating individual sound sources corresponding to the respective selected loudspeaker sets comprises generating the individual sound sources by dividing a sound source signal according to frequency band.

14. A method of reproducing a screen sound source with high resolution according to claim 11, wherein selecting a plurality of loudspeaker sets comprises selecting (620) at least two of loudspeaker sets, with each set including loudspeakers disposed at vertices of virtual polygons, including the determined virtual screen sound source position.

15. The method of claim 14, wherein generating individual sound sources corresponding to the respective selected loudspeaker sets comprises generating the individual sound sources by dividing a sound source signal according to frequency band.

## Patentansprüche

1. Vorrichtung (100) zur Positionierung einer Bildschirmtonquelle mit hoher Auflösung, wobei die Vorrichtung umfasst:
einen Controller (110), der ausgebildet ist, um, zwecks Positionierung einer virtuellen Bildschirmtonquelle in Synchronizität mit einem visuellen Objekt, das an einer spezifischen Position auf einem Bildschirm einer Anzeige angezeigt wird, mehrere Lautsprechersets auszuwählen, wobei jedes Set zumindest drei von mehreren Lautsprechern (200) beinhaltet, die an der Peripherie der Anzeige (300) angebracht sind;
**gekennzeichnet durch**
einen Multitonquellenprozessor (120), der ausgebildet ist, um individuelle Tonquellen, die den vom Controller ausgewählten jeweiligen Lautsprechersets entsprechen, für das selbige visuelle Objekt zu erzeugen, eine Multitonquelle durch Überlappen der erzeugten individuellen Tonquellen zu erzeugen, und die Multitonquelle **durch** in den Lautsprechersets enthaltene Lautsprecher auszugeben.

2. Vorrichtung nach Anspruch 1, wobei der Multitonquellenprozessor beinhaltet:
mehrere Tonquellenerzeuger (121), die ausgebildet sind, um die individuellen Tonquellen für die vom Controller ausgewählten jeweiligen Lautsprechersets aus einem Tonquellensignal zu erzeugen;
einen Tonquellensynthesizer (122), der ausgebildet ist, um die Multitonquelle durch Synthetisieren der von den jeweiligen Tonquellenerzeugern erzeugten individuellen Tonquellen zu erzeugen;
einen Tonquellenverstärker (123), der ausgebildet ist, um die vom Tonquellensynthesizer erzeugte Multitonquelle zu verstärken; und
eine Lautsprecherausgabeeinheit (124), die ausgebildet ist, um einen Ausgabeweg auszuwählen, um die vom Tonquellenverstärker verstärkte Multitonquelle durch die Lautsprecher auszugeben, die in den vom Controller ausgewählten Lautsprechersets enthalten sind.

3. Vorrichtung nach Anspruch 2, wobei der Multitonquellenprozessor weiterhin beinhaltet:
ein Bandpassfilter (125), das ausgebildet ist, um das Tonquellensignal frequenzbandgemäß aufzuteilen und die aufgeteilten Tonquellensignale an die jeweiligen Tonquellenerzeuger auszugeben.

4. Vorrichtung nach Anspruch 1, die weiterhin umfasst:
einen Digital/Analog-(D/A)-Konverter, der ausgebildet ist, um digitale Tonquellendaten in ein analoges Tonquellensignal umzusetzen.

5. Vorrichtung nach Anspruch 1, wobei der Controller zumindest zwei der Lautsprechersets auswählt, wobei jedes Set Lautsprecher (200) beinhaltet, die an Eckpunkten virtueller Polygone angeordnet sind, die eine Position des visuellen Objekts in denselben beinhalten.

6. Vorrichtung nach Anspruch 5, wobei der Controller die Lautsprechersets, die jeweils zumindest drei Lautsprecher (200) beinhalten, unter Bezugnahme auf Lautsprechersetinformationen auswählt, die in Übereinstimmung mit einer Position auf dem Bildschirm der Anzeige konfiguriert sind.

7. Vorrichtung nach Anspruch 5, wobei der Controller die Lautsprechersets in der Reihenfolge von kleinen zu großen Maximalwinkeln zwischen einem virtuellen Bildschirmtonquellenreferenzvektor von einem Betrachter zum visuellen Objekt und virtuellen Lautsprechervektoren von dem Betrachter zu jeweiligen Lautsprechern auswählt.

8. Vorrichtung nach Anspruch 5, wobei der Controller die Lautsprechersets in der Reihenfolge von kleinen zu großen Summen von Winkeln zwischen einem virtuellen Bildschirmtonquellenreferenzvektor von einem Betrachter zum visuellen Objekt und virtuellen Lautsprechervektoren von dem Betrachter zu jeweiligen Lautsprechern auswählt.

9. Vorrichtung nach Anspruch 5, wobei der Controller die Lautsprechersets in der Reihenfolge von kleinen zu großen Mitteln von Winkeln zwischen einem virtuellen Bildschirmtonquellenreferenzvektor von einem Betrachter zum visuellen Objekt und virtuellen Lautsprechervektoren von dem Betrachter zu jeweiligen Lautsprechern auswählt.

10. Vorrichtung nach Anspruch 5, wobei der Controller die Lautsprechersets in der Reihenfolge von kleinen zu großen Flächen der virtuellen Polygone auswählt.

11. Verfahren zur Wiedergabe einer Bildschirmtonquelle mit hoher Auflösung, wobei das Verfahren umfasst:
in Reaktion darauf, dass eine Tonquelle zugeführt wird, Bestimmen (510, 610) einer Position einer virtuellen Bildschirmtonquelle, die in Synchronizität mit einem visuellen Objekt wiederzugeben ist, das an einer spezifischen Position auf dem Bildschirm einer Anzeige angezeigt wird;
in Reaktion darauf, dass die Position der virtuellen Bildschirmtonquelle bestimmt wird, Auswählen (520, 620) mehrerer Lautsprechersets, wobei jeder Satz zumindest drei von mehreren Lautsprechern beinhaltet, in Entsprechung zu der bestimmten Position der virtuellen Bildschirmtonquelle unter Bezugnahme auf Lautsprechersetinformationen;
Erzeugen (530, 630) individueller Tonquellen, die den jeweiligen ausgewählten Lautsprechersets entsprechen, für das visuelle Objekt;
Erzeugen einer Multitonquelle durch Überlappen der erzeugten individuellen Tonquellen; und
Ausgeben der erzeugten Multitonquelle durch in den ausgewählten Lautsprechersets enthaltene Lautsprecher.

12. Verfahren nach Anspruch 11, wobei das Ausgeben der erzeugten Multitonquelle durch in den ausgewählten Lautsprechersets enthaltene Lautsprecher das Verstärken und das Ausgeben der Multitonquelle umfasst.

13. Verfahren nach Anspruch 11, wobei das Erzeugen individueller Tonquellen, die den jeweiligen ausgewählten Lautsprechersets entsprechen, das Erzeugen der individuellen Tonquellen durch frequenzbandgemäßes Aufteilen eines Tonquellensignals umfasst.

14. Verfahren zur Wiedergabe einer Bildschirmtonquelle mit hoher Auflösung nach Anspruch 11, wobei das Auswählen mehrerer Lautsprechersets das Auswählen (620) zumindest zweier Lautsprechersets umfasst, wobei jedes Set Lautsprecher beinhaltet, die an Eckpunkten virtueller Polygone angeordnet sind, die die bestimmte Position der virtuellen Bildschirmtonquelle beinhalten.

15. Verfahren nach Anspruch 14, wobei das Erzeugen individueller Tonquellen, die den jeweiligen ausgewählten Lautsprechersets entsprechen, das Erzeugen der individuellen Tonquellen durch frequenzbandgemäßes Aufteilen eines Tonquellensignals umfasst.

## Revendications

1. Appareil (100) de positionnement d'une source sonore d'écran à haute résolution, l'appareil comprenant un organe de commande (110) configuré, afin de positionner une source sonore virtuelle d'écran en synchronisation avec un objet visuel visualisé en un emplacement spécifique sur un écran d'un dispositif de visualisation, pour sélectionner une pluralité d'ensembles d'enceintes, chaque ensemble comportant au moins trois enceintes d'une pluralité d'enceintes (200) installées à la périphérie du dispositif de visualisation (300) ;
**caractérisé par**
un processeur de source de sons multiples (120) configuré pour générer un objet de sources sonores individuelles correspondant aux ensembles d'enceintes respectifs sélectionnés par l'organe de commande pour le même objet visuel, générer une source de sons multiples en chevauchant les sources sonores individuelles générées, et émettre la source de sons multiples par l'intermédiaire des enceintes comprises dans les ensembles d'enceintes.

2. Appareil selon la revendication 1, dans lequel le processeur de source de sons multiples comprend :
une pluralité de générateurs de sources sonores (121) configurées pour générer les sources sonores individuelles pour les ensembles d'enceintes respectifs sélectionnés par l'organe de commande à partir d'un signal de source sonore ;
un synthétiseur de source sonore (122) configuré pour générer la source de sons multiples en synthétisant les sources sonores individuelles générées par les générateurs de sources sonores respectifs ;
un amplificateur de source sonore (123) configuré pour amplifier la source de sons multiples générée par le synthétiseur de source sonore ; et
une unité de sortie d'enceinte (124) configurée pour sélectionner une trajectoire de sortie pour émettre la source de sons multiples amplifiée par l'amplificateur de source sonore par l'intermédiaire des enceintes comprises dans les ensembles d'enceintes sélectionnés par l'organe de commande.

3. Appareil selon la revendication 2, dans lequel le processeur de source de sons multiples comprend en outre :
un filtre passe-bande (125) configuré pour diviser le signal de source sonore conformément à la bande de fréquences et émettre les signaux de source sonore divisés auprès des générateurs de sources sonores respectifs.

4. Appareil selon la revendication 1, comprenant en outre :
un convertisseur numérique-analogique configuré pour convertir les données de source sonore numériques en un signal de source sonore analogique.

5. Appareil selon la revendication 1, dans lequel l'organe de commande sélectionne au moins deux des ensembles d'enceintes, chaque ensemble comprenant des enceintes (200) disposées à des sommets de polygones virtuels incluant un emplacement d'objet visuel.

6. Appareil selon la revendication 5, dans lequel l'organe de commande sélectionne les ensembles d'enceintes comprenant chacun au moins trois enceintes (200) en se référant à des informations d'ensemble d'enceintes configurées conformément au positionnement sur l'écran du dispositif de visualisation.

7. Appareil selon la revendication 5, dans lequel l'organe de commande sélectionne les ensembles d'enceintes par ordre de grandeur croissant d'angles maximum entre un vecteur de référence de source sonore d'écran virtuel, d'un spectateur à un objet visuel, et des vecteurs d'enceintes virtuels, du spectateur aux enceintes respectives.

8. Appareil selon la revendication 5, dans lequel l'organe de commande sélectionne les ensembles d'enceintes par ordre de grandeur croissant des sommes d'angles entre un vecteur de référence de source sonore d'écran virtuel, d'un spectateur à l'objet visuel, et des vecteurs d'enceintes virtuels, du spectateur aux enceintes respectives.

9. Appareil selon la revendication 5, dans lequel l'organe de commande sélectionne les ensembles d'enceintes par ordre de grandeur croissant des moyennes d'angles entre un vecteur de référence de source sonore d'écran virtuel, d'un spectateur à l'objet visuel, et des vecteurs d'enceintes virtuels, du spectateur aux enceintes respectives.

10. Appareil selon la revendication 5, dans lequel l'organe de commande sélectionne les ensembles d'enceintes par ordre de grandeur croissant des aires des polygones virtuels.

11. Procédé de reproduction d'une source sonore d'écran à haute résolution, le procédé comprenant :
en réaction à l'entrée d'une source sonore, la détermination (510, 610) de la position d'une source sonore d'écran virtuelle devant être reproduite en synchronisation avec un objet visuel visualisé en un emplacement spécifique sur l'écran d'un dispositif de visualisation ;
en réaction à la détermination de la position de la source sonore d'écran virtuelle, la sélection (520, 620) d'une pluralité d'ensembles d'enceintes, chaque ensemble comportant au moins trois enceintes d'une pluralité d'enceintes, en correspondance au positionnement déterminé de la source sonore d'écran virtuelle en référence aux informations d'ensemble d'enceintes ;
la génération (530, 630) de sources sonores individuelles correspondant aux ensembles d'enceintes respectifs sélectionnés pour l'objet visuel ;
la génération d'une source de sons multiples en chevauchant les sources sonores individuelles générées ; et
l'émission de la source de sons multiples générée, par l'intermédiaire des enceintes comprises dans les ensembles d'enceintes sélectionnés.

12. Procédé selon la revendication 11, dans lequel l'émission de la source de sons multiples générée, par l'intermédiaire des enceintes comprises dans les ensembles d'enceintes sélectionnés, comprend l'amplification et l'émission de la source de sons multiples.

13. Procédé selon la revendication 11, dans lequel la génération de sources sonores individuelles correspondant aux ensembles d'enceintes respectifs sélectionnés comprend la génération des sources sonores individuelles en divisant un signal de source sonore conformément à la bande de fréquences.

14. Procédé de reproduction d'une source sonore d'écran à haute résolution selon la revendication 11, dans lequel la sélection d'une pluralité d'ensembles d'enceintes comprend la sélection (620) d'au moins deux ensembles d'enceintes, chaque ensemble comprenant des enceintes disposées aux sommets de polygones virtuels incluant la position de la source sonore d'écran virtuelle déterminée.

15. Procédé selon la revendication 14, dans lequel la génération des sources sonores individuelles correspondant aux ensembles d'enceintes respectifs sélectionnés comprend la génération des sources sonores individuelles en divisant un signal de source sonore conformément à la bande de fréquences.
